# EUROPÄISCHE PATENTSCHRIFT

(11) **EP 1 921 322 B1**
(45) Veröffentlichungstag und Bekanntmachung des Hinweises auf die Patenterteilung: **23.12.2009**
(21) Anmeldenummer: 07021358.2
(22) Anmeldetag: 02.11.2007
(51) Int. Cl.: F04D 19/04, F04D 29/06, F16N 7/36, F16C 33/66

(54) **Lagermodul für eine Vakuumpumpe**
Bearing module for a vacuum pump
Module du palier pour une pompe à vide

(30) Priorität: 11.11.2006 DE 102006053237
(43) Veröffentlichungstag der Anmeldung: 14.05.2008
(73) Patentinhaber: Pfeiffer Vacuum GmbH, 35614 Asslar (DE)
(72) Erfinder: Koch, Bernhard, 35799 Merenberg (DE); Stanzel, Jörg, 35583 Wetzlar (DE)

(56) Entgegenhaltungen:
- EP-A- 0 123 989
- EP-A- 1 267 081
- WO-A-2006/131694

## Beschreibung

Die Erfindung betrifft ein Lagermodul für eine Vakuumpumpe mit einer schnelldrehenden Welle nach dem Oberbegriff des ersten Anspruchs.

Trotz der Fortschritte in der Wälzlagertechnik ist es insbesondere für schnelldrehende Wellen notwendig, die die Drehung unterstützenden Wälzlager mit Schmiermittel zu versorgen. Dieses Schmiermittel unterliegt der Alterung und zunehmenden Verunreinigung. Gleichzeitig verschleißt das Wälzlager trotz Schmierung durch Abrieb. Daher müssen beide von Zeit zur Zeit ausgetauscht werden.

Im Stand der Technik ist es daher üblich, einen sogenannten Schmiermittelspeicher vorzusehen, in welchem das Schmiermittel wie in einem Schwamm gespeichert ist. Das Wälzlager wird nahe einem Wellenende platziert und durch einen Vorschraubring zusammen mit einem Ring aus flexiblem Material gegen ein Gehäuseteil gespannt. Auf der dem Wälzlager abgewandten Seite und das Wellenende umgebend ist der Schmiermittelspeicher angeordnet. Über Fliehkraftwirkung wird das Schmiermittel in das Wälzlager gefördert und tropft von dort aus durch Schwerkraftwirkung zurück in den Schmiermittelspeicher.

Für die Funktion der kompletten Lagerung ist der Grad der Verspannung des oben erwähnten flexiblen Materials wichtig. Problematisch an der Lösung des Standes der Technik ist daher, dass diese Verspannung nach einem Lagerwechsel in dem Gerät exakt eingestellt werden muss, in dem die Lageranordnung verbaut ist. Dies erschwert den Service an den Geräten. Außerdem ist die Schwerkraftwirkung zur Rückförderung des Schmiermittels unzureichend, da sie von der Ausrichtung des Geräts im Schwerefeld der Erde abhängt. Im Stand der Technik sind sehr aufwändige Konstruktionen bekannt, beispielsweise in der DE-A 103 21 326, die eine aufwändige Schmiermittelführung und Schmiermittelpumpen benötigt. Diese Lösung arbeitet nur bei Förderung größerer Schmiermittelmengen zuverlässig.

Die EP-A-0123989, die als nächstliegender Stand der Technik angesehen wird, stellt eine Anordnung zur Versorgung der Lager einer Welle mit Schmiermittel vor. Es wird ein Gasdruckgefälle zwischen den beiden Stirnseiten eines Lagers erzeugt und darüber Schmiermittel in das Lager eingespritzt.

Aufgabe der Erfindung ist es daher, eine konstruktiv einfache und für viele Einbaulagen taugliche Anordnung zur Versorgung eines Wälzlagers mit einem Schmiermittel vorzustellen.

Gelöst wird die Aufgabe durch ein Lagermodul mit den Merkmalen des ersten Anspruchs.

Ein radiales Fördermittel ist auf der Seite des Wälzlagers angeordnet, die der Struktur gegenüberliegt, welche den Schmiermittelfluss vom Schmiermittelspeicher auf die Welle ermöglicht. Dieses Fördermittel fördert durch Kapillarkräfte das Schmiermittel zurück in den Schmiermittelspeicher. Hierdurch ergibt sich ein Schmiermittelkreislauf, der vorteilhaft von der Schwerkraft unabhängig ist. Dies erlaubt es, das Gerät in verschiedenen Lagen ohne einen Verlust der Schmierung des Wälzlagers zu betreiben. Somit wird eine einfache Konstruktion mit den Vorteilen einer Viellagenfähigkeit erreicht. Diese Anordnung ist außerdem aufgrund der Nutzung von Kapillarkräften in der Lage, einen Schmiermittelkreislauf mit kleinen Fördermengen zu gewährleisten.

Die abhängigen Ansprüche 2 bis 9 stellen vorteilhafte Weiterbildungen dar.

Eine günstige, kompakte Bauform ergibt sich, wenn das radiale Fördermittel im Lagermodul angeordnet ist. Durch diese Maßnahme erfolgt die Bereitstellung des Fördermittels bereits bei Herstellung des Lagermoduls.

Ein zusätzliches axiales Fördermittel ist von Vorteil, um mehr Freiheiten bei der Gestaltung des Schmiermittelkreislaufs zu erreichen. Der Schmiermittelspeicher und das radiale Fördermittel können so voneinander beabstandet werden.

Die Anordnung nach Anspruch 4 haltert das Wälzlager mit zwei Bauteilen, die über ein Gewinde miteinander verschraubt sind. Dieses Gewinde, welches an der Außenseite des einen und der Innenseite des anderen Bauteils vorgesehen ist, sorgt gleichzeitig für eine Verbindung der Bauteile und eine relative Positionierung zueinander. Diese bewirkt einen Spalt zwischen den Bauteilen, dessen Größe vom Grad der Verschraubung abhängt. Da die relative Positionierung auch die Lage des Wälzlagers bestimmt, kann diese sehr leicht und genau durch die Verschraubung eingestellt werden.

In einer Weiterbildung steht der Spalt in Verbindung mit einer Bohrung im Außenring des Wälzlagers, so dass Schmiermittel aus dem Wälzlager austreten und in den Spalt gelangen kann. Dies vereinfacht den Aufbau des Schmiermittelkreislaufs und gewährleistet einen sicheren Transfer von Schmiermittel aus dem Lager heraus.

In einer anderen Weiterbildung weisen erstes und zweites Teil eine Oberflächenbeschichtung auf, die eine chemische Reaktion mit dem Schmiermittel verhindert, was sowohl dessen Nutzungszeitraum verlängert als auch die Zersetzung der beiden Teile verhindert. Im Zusammenspiel mit dem Gedanken eines Einschubs ergibt sich der Vorteil, dass die zu beschichtenden Teile klein im Vergleich zu anderen Gehäusebauteilen sind, so dass hier Kosten gespart werden können.

In einer anderen Weiterbildung sind erstes und zweites Bauteil Bestandteile eines Einschubs, wodurch die Baugruppe zusammengefasst wird und nur die Position des Einschubs relativ zum Gehäuse des Geräts festgelegt werden muss. Der Einschub wird in das Gehäuse der Vakuumpumpe eingeschoben und lösbar fixiert. Dies ermöglicht es, die Einstellung der Wälzlagerposition durch Zusammenbau des Einschubs vorzunehmen. Dieser wird anschließend im Gehäuse fixiert. Die Einstellung erfolgt nicht mehr an der Vakuumpumpe sondern bei der Produktion des Einschubs, so dass die Servicefreundlichkeit gesteigert wird.

In einer erfolgreichen Bauform von Vakuumpumpen, insbesondere Turbomolekularpumpen, sind Wälzlager auf der Vorvakuumseite der Welle mit einem Permanentmagnetlager auf der Hochvakuumseite kombiniert. Dieses Permanentmagnetlager übt Kräfte aus, die entlang der Wellenachse gerichtet sind. Diese Kräfte erfordern ein besonders exaktes Einstellen der Position des Wälzlagers, was mit dem Lagermodul dieser Weiterbildung erreicht werden kann. Außerdem ist es für diese Vakuumpumpen wichtig, in verschiedenen Einbaulagen betrieben werden zu können. Die schnelle Drehung der Welle gerade bei Molekularpumpen verlangt außerdem nach einem zuverlässigen Schmiermittelkreislauf, der mit der vorgestellten Anordnung erreicht wird.

Anhand zweier Ausführungsbeispiele soll die Erfindung näher erläutert und die Vorteile vertieft werden. Es zeigen:

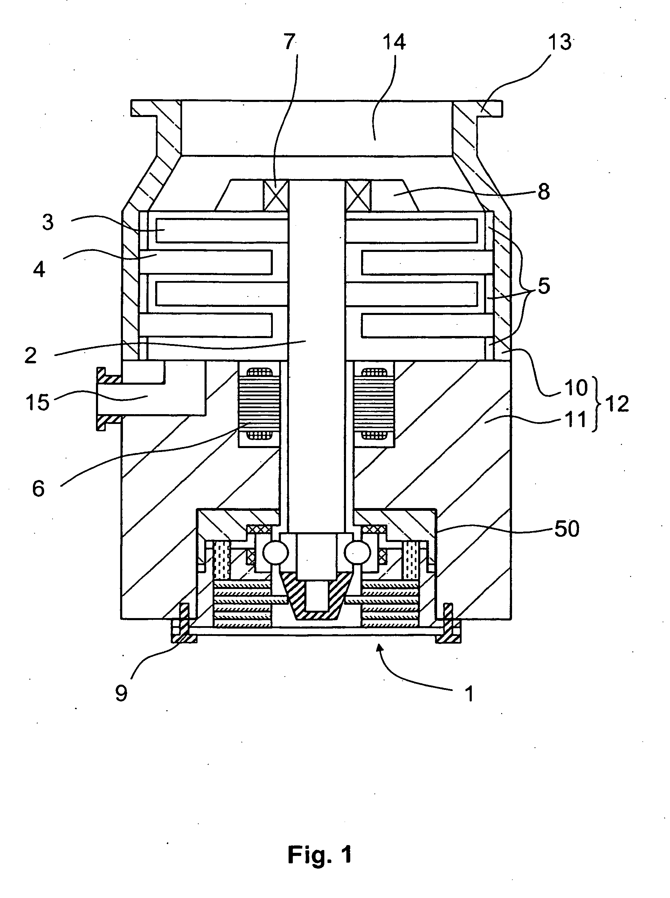

- Fig. 1:: Schnitt durch eine Vakuumpumpe, die ein erfindungsgemäßes Lagermodul aufweist.
- Fig. 2:: Schnitt durch ein erstes erfindungsgemäßes Lagermodul.
- Fig. 3:: Schnitt durch ein zweites erfindungsgemäßes Lagermodul.

Die erste Abbildung zeigt in einer Schnittdarstellung eine Turbomolekularvakuumpumpe, im folgenden: Turbopumpe, die mit dem erfindungsgemäßen Lagermodul ausgestattet ist. Diese Turbopumpe weist ein Gehäuse 12 mit einem Oberteil 10, welches das Pumpsystem beinhaltet, und einem Unterteil 11 auf, welches unter anderem den Antrieb 6 beherbergt. Dieser Antrieb versetzt die Welle 2 in schnelle Drehung, die für Gasreibungspumpen und insbesondere Turbopumpen im Bereich von mehr als 10000 Umdrehungen pro Minute liegen. Auf der Welle sind Schaufeln tragende Rotorscheiben 3 befestigt. Diese sind auf der Welle beabstandet angeordnet. In den derart entstehenden Lücken befinden sich ebenfalls mit Schaufeln versehene Statorscheiben 4, welche durch Distanzringe 5 auf axialem Abstand gehalten und durch das Oberteil des Gehäuses zentriert werden. Das Pumpengehäuse weist ferner einen den Gaseinlass 14 umgebenden Flansch 13 auf, mit dem die Pumpe an einem Rezipienten lösbar befestigt werden kann. Das Gas wird vom Gaseinlass kommenden durch die Rotor- und Statorscheiben gefördert und durch den Gasauslass 15 ausgestoßen. Ein Lagerhalter 8 ist vorgesehen, ein die Welle drehbar unterstützendes Lager 7 zu haltern. Dieses Lager befindet sich im Beispiel am Wellenende und ist vorteilhaft als Permanentmagnetlager ausgebildet. Denkbar ist auch, dieses Lager im Bereich des Antriebs anzuordnen und so eine fliegende Lagerung zu gestalten. Ebenfalls als Weiterbildung denkbar ist, den Rotor glockenförmig zu formen und das Lager 7 unter dieser Glocke zu platzieren. Am dem Lager 7 entgegengesetzten Ende der Welle ist ein weiteres Lager angeordnet. Dieses befindet sich in einem nach der Erfindung gestalteten Lagermodul 1, welches in eine im Unterteil des Gehäuses vorgesehene zylindrische Aufnahme 50 eingeschoben und beispielsweise mit Schrauben 9 in diesem lösbar fixiert ist. Andere Sicherungsmittel sind denkbar.

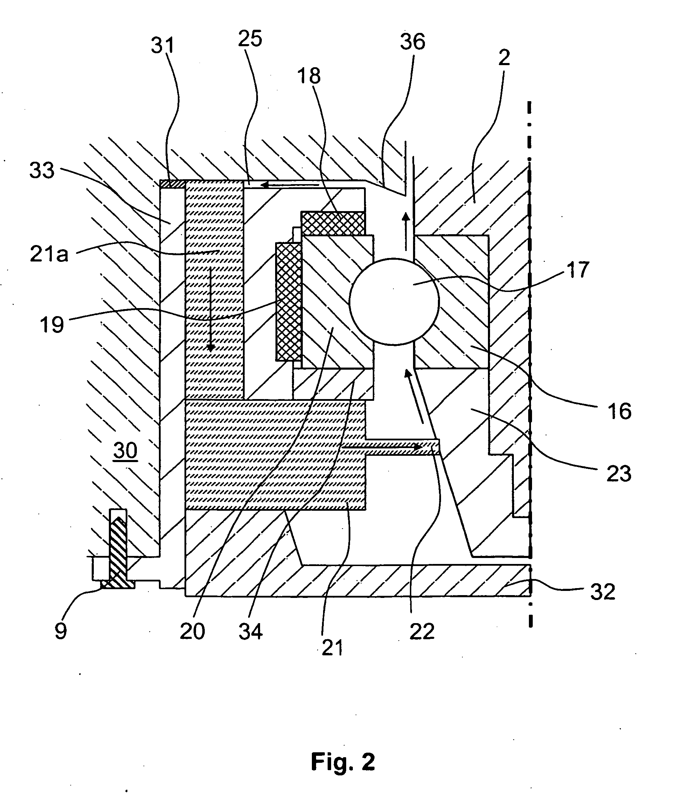

Ein Lagermodul in einer ersten Ausführungsvariante der Erfindung ist in Abbildung 2 genauer dargestellt. Dieses Lagermodul 33 ist im Gehäuse 30 der Vakuumpumpe angeordnet. Dazu ist es in einen Hohlraum eingeschoben und beispielsweise über Schrauben 9 oder andere Sicherungsmittel lösbar darin fixiert. Im Lagermodul befindet sich ein Schmiermittelspeicher 21, der aus einem saugfähigen und über Kapillarkräfte fördernden Material, beispielsweise Filz, aufgebaut ist. Eine Struktur 22 berührt gleitend eine über Fliehkraftwirkung fördernde Strukur, die sich auf der Welle 2 befindet. Über diese Struktur wird Schmiermittel auf die in schneller Drehung befindliche Welle transportiert. Die über Fliehkraftwirkung fördernde Struktur ist als Spritzmutter 23 ausgeführt. Eine solche Spritzmutter ist auf ein Gewinde am Wellenende aufgeschraubt und besitzt eine konische Oberfläche. Der Durchmesser dieses Konus weitet sich in Richtung des Wälzlagers auf. Dieses ist aus den Bauteilen Außenring 20, Innenring 16 und Wälzkörper 17 aufgebaut. Der Innenring ist auf der Welle 2 angeordnet und durch die Spritzmutter 23 gesichert. Durch die Spritzmutter wird Schmiermittel in das Wälzlager hineingeführt. Überschüssiges Schmiermittel wird entlang der Pfeilrichtung aus dem Wälzlager hinausgedrückt und von einer am ruhenden Gehäuse befindlichen konischen Fläche 36 aufgenommen. Durch einen Spalt 25, dessen Weite so bemessen ist, dass eine Förderwirkung aufgrund der Kapillarkräfte entsteht, wird das Schmiermittel zum Teil 21a des Schmiermittelspeichers geführt. Die genaue Einstellung der Weite des Spaltes wird über eine Distanzscheibe 31 gewährleistet. Das Teil 21a des Schmiermittelspeichers ragt nur an einigen Stellen aus der Stirnfläche des Lagermoduls 33 heraus und in den Spalt hinein. Der Spalt kann zusätzlich mit Filz oder einem ähnlichen Werkstoff gefüllt sein, so dass die Förderung in radialer Richtung über die Kapillarkräfte im Werkstoff erfolgt. Dadurch muss die Spaltweite nicht so knapp bemessen sein, was Fertigung und Montage vereinfacht. Statt eines Spaltes kann auch eine Bohrung zwischen dem Bereich der konischen Fläche 36 und dem Teil 21a des Schmiermittelspeichers vorgesehen sein. Durch einen Deckel 32 wird der Schmiermittelspeicher in Position gehalten und die Anordnung vakuumdicht verschlossen. Teil 21 a und Schmiermittelspeicher 21 können einstückig oder aus getrennten Teilen aufgebaut sein. Letzteres vereinfacht die Montage. Der Außenring 20 des Wälzlagers ist in durch einen Axialen Schwingring 18 und einen radialen Schwingring 19 schwingfähig gelagert. Der Außenring wird über einen Vorschraubring 34 im Lagermodul gesichert.

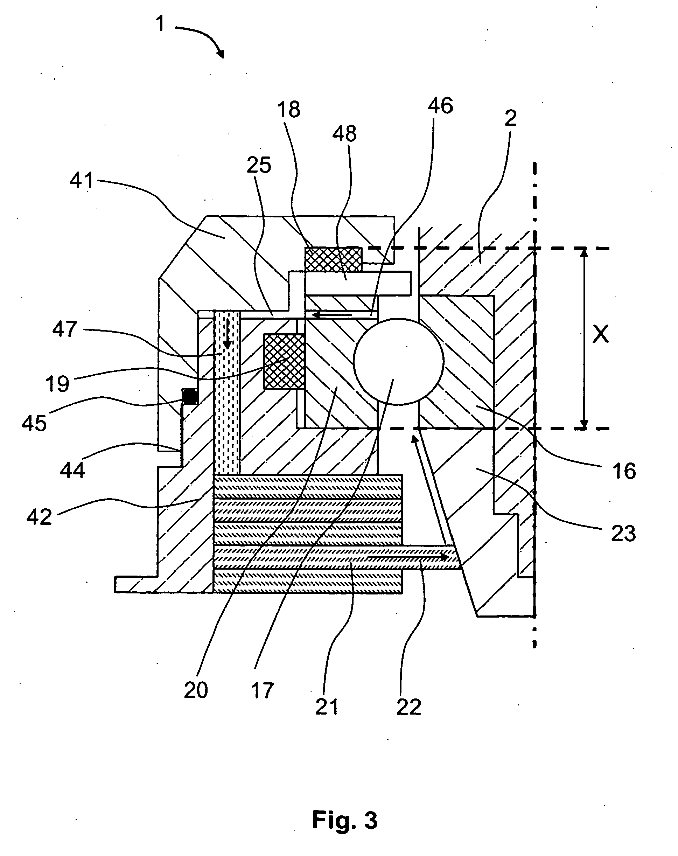

Ein zweites Ausführungsbeispiel des Lagermoduls zeigt die Abbildung 3. In diesem Beispiel ist das Lagermodul 1 aus einem ersten Teil 41 und einem zweite Teil 42 aufgebaut, die über ein Gewinde 44 miteinander verschraubt sind. Zwischen den beiden Teilen entsteht ein Spalt 25. Zwischen den Teilen ist außerdem eine Dichtung 45 angeordnet, die zum einen diesen Spalt abdichtet und zum anderen eine axiale Spannung erzeugt, die einem Auseinanderdrehen der Teile beispielsweise durch Schwingungen entgegenwirkt. Andere Sicherungsmittel sind denkbar.

Die Teile 41 und 42 haltern über radiale 19 und achsiale 18 Schwingringe den Außenring 20 eine Wälzlagers. Zwischen axialem Schwingring und Außenring ist eine Scheibe 48 angeordnet, die als Schmiermittelsperre dient. Die Teile 41 und 42 umgeben den Endbereich einer Welle 2, an deren Ende ein Gewinde vorgesehen ist, auf die eine Spritzmutter 23 mit konischer Außenfläche aufgeschraubt wird. Der Innenring 16 des Wälzlager wird zwischen Welle und Spritzmutter festgeklemmt, im Inneren des Wälzlagers befinden sich die Wälzkörper 17. Im Inneren des Teils 42 ist der Schmiermittelspeicher 21 angeordnet, der eine Struktur 22 hat, welche mit der Spritzmutter in gleitendem Kontakt steht. Der Schmiermittelspeicher ist in diesem Beispiel aus mehreren Schichten eines saugfähigen und über Kapillarkräfte fördernden Materials aufgebaut. Aus diesem Schmiermittelspeicher gelangt das Schmiermittel über die Struktur 22 auf den Konus der Spritzmutter und wird durch die bei schneller Drehung der Welle auftretenden Fliehkräfte in das Innere des Wälzlagers gefördert. In dessen Außenring ist eine Bohrung 46 vorgesehen, die mit dem Spalt 25 in Kontakt steht, so dass überschüssiges Schmiermittel durch die Bohrung aus dem Wälzlager hinaus in den Spalt 25 gelangt. Dieser Spalt kann so eng gestaltet sein, dass Kapillarkräfte entstehen, oder mit einem fördernden Material gefüllt sein, so dass Schmiermittel radial nach außen gefördert wird. Dort wird es dann vom axialen Fördermittel 47 aufgenommen und über Kapillarkräfte zurück in den Schmiermittelspeicher gefördert. Um die Mittelachse herum kann in einer Weiterbildung eine Mehrzahl von Fördermitteln 47 angeordnet sein, womit es möglich wird, das Lagermodul und damit die Vakuumpumpe in praktisch jeder Raumrichtung zu orientieren. Das Fördermittel selbst beinhaltet einen porösen, gesinterten Kunststoff, ein filzartiges oder ein anderes Material, welches in der Lage ist, Schmiermittel in seinem Inneren aufzunehmen und zu fördern. Die Fördermittel können stabförmig gestaltet sein.

Alternativ kann anstelle des Spalts 25 eine Bohrung vorgesehen sein, die als radiales Fördermittel wirkt. Unter radial ist hierbei insbesondere eine Förderwirkung von der Mittelachse nach außen zu verstehen. Das radiale Fördermittel kann dabei gleichzeitig auch einen Versatz in axialer Richtung besitzen, so dass in den Abbildungen eine zur Mittelachse geneigte Förderrichtung entsteht.

Anstelle der Bohrung 46 kann die Scheibe 48 mit radialen Kanälen oder einem sich von innen nach außen erstreckenden Spiralkanal versehen sein.

Einen weiteren Vorteil erreicht dieses Lagermodul dadurch, dass über die Verschraubung der Teile 41 und 42 das Maß X eingestellt werden kann. Dieses Maß ist gerade im Zusammenspiel mit Permanentmagnetlagern von hoher Bedeutung. Während des Betriebs der Vakuumpumpe wird die Welle in die vom Schmiermittelspeicher abgewandte Richtung verschoben. Dadurch wird der Schwingring 18 zusammengedrückt. Damit ist die Lage der Welle im Raum insbesondere durch die Position des Bauteils 41 festgelegt. Diese Position gegenüber dem Teil 42, damit gegenüber dem Gehäuse der Vakuumpumpe und damit letztlich gegenüber dem Permanentmagnetlager wird über das Gewinde 44 hochpräzise eingestellt. Vorteilhaft ist daran auch, dass diese Einstellung bei Herstellung des Lagermoduls erfolgt und nicht mehr bei Montage der Vakuumpumpe.

## Patentansprüche

1. Lagermodul (1) für eine Vakuumpumpe mit einer schnelldrehenden Welle (2), welches einen Außenring (20) eines Wälzlagers und einen Schmiermittelspeicher (21) beinhaltet, wobei der Schmiermittelspeicher eine Struktur (22) aufweist,
wobei ein radiales Fördermittel (25; 46) auf der der Struktur gegenüberliegenden Seite des Wälzlagers angeordnet ist, welches eine Rückförderung des Schmiermittels in den Schmiermittelspeicher bewirkt, **dadurch gekenzeichnet, dass** die Struktur (22) zur Übertragung von Schmiermittel mit einer wellenseitigen Förderstruktur (23), welche über Fliehkräfte das Schmiermittel in das Wälzlager fördert, in gleitendem Kontakt steht.

2. Lagermodul nach Anspruch 1, **dadurch gekennzeichnet, dass** das radiale Fördermittel (25; 46) im Lagermodul (1) angeordnet ist.

3. Lagermodul nach Anspruch 1 oder 2, **dadurch gekennzeichnet, dass** zusätzlich im Schmiermittelkreislauf ein axiales Fördermittel (21a; 47) zwischen radialem Fördermittel (25; 46) und Schmiermttelspeicher (21) angeordnet ist, das den Transport des Schmiermittels ermöglicht.

4. Lagermodul nach Anspruch 1, 2 oder 3, **dadurch gekennzeichnet, dass** das Lagermodul (1) ein erstes (41) und ein zweites Bauteil (42) aufweist und das radiale Fördermittel einen Spalt (25) zwischen erstem und zweitem Bauteil umfasst.

5. Lagermodul nach Anspruch 4, **dadurch gekennzeichnet, dass** der Außenring (20) des Lagers eine Bohrung (46) aufweist, die mit dem Spalt (25) in Verbindung steht, so dass Schmiermittel vom Inneren des Wälzlagers nach außen fließen kann.

6. Lagermodul nach Anspruch 4, **dadurch gekennzeichnet, dass** wenigstens eines von erstem (41) und zweitem Teil (42) zur Aufnahme des Schmiermittelspeichers (21) angepasst ist.

7. Lagermodul nach einem der vorhergehenden Ansprüche, **dadurch gekennzeichnet, dass** erstes (41) und zweites (42) Teil eine Beschichtung wenigstens des Teils ihrer Oberfläche aufweisen, der mit dem Schmiermittel in Berührung gelangt, um so eine chemische Veränderung ihres Materials durch Reaktion mit dem Schmiermittel zu verhindern.

8. Lagermodul nach einem der vorhergehenden Ansprüche, **dadurch gekennzeichnet, dass** das Lagermodul (1) in eine zylindrische Aufnahme (50) des Gehäuses der Turbomolekularpumpe eingeschoben und lösbar fixiert ist.

9. Vakuumpumpe mit einer Welle, **dadurch gekennzeichnet, dass** ein Lagermodul (1) nach einem der vorhergehenden Ansprüche und ein Permanentmagnetlager (7) zusammen die Welle (2) drehbar unterstützen.

## Claims

1. Bearing module (1) for a vacuum pump with a high-speed shaft (2) which comprises an outer race (20) of a rolling contact bearing and a lubricant store (21), wherein the lubricant store has a structure (22), wherein a radial delivery means (25; 46) is disposed on the side of the rolling contact bearing which lies opposite the structure and causes the lubricant to be returned to the lubricant store, **characterised in that**, in order to transfer lubricant, the structure (22) is in sliding contact with a delivery structure (23) which is on the shaft side and delivers the lubricant into the rolling contact bearing by way of centrifugal forces.

2. Bearing module according to Claim 1, **characterised in that** the radial delivery means (25; 46) is disposed in the bearing module (1).

3. Bearing module according to Claim 1 or 2, **characterised in that** an axial delivery means (21a; 47), which enables the lubricant to be transported, is additionally disposed in the lubricant circuit between the radial delivery means (25; 46) and the lubricant store (21).

4. Bearing module according to Claim 1, 2 or 3, **characterised in that** the bearing module (1) has a first (41) and a second component (42), and the radial delivery means comprises a gap (25) between the first and the second component.

5. Bearing module according to Claim 4, **characterised in that** the outer race (20) of the bearing has a bore (46) which communicates with the gap (25), so that lubricant can flow outwards from the interior of the rolling contact bearing.

6. Bearing module according to Claim 4, **characterised in that** at least one of the first (41) and second part (42) is adapted to accommodate the lubricant store (21).

7. Bearing module according to any one of the preceding Claims, **characterised in that** the first (41) and second (42) part have a coating on at least the part of their surface which comes into contact with the lubricant in order thus to prevent a chemical change of their material through a reaction with the lubricant.

8. Bearing module according to any one of the preceding Claims, **characterised in that** the bearing module (1) is inserted in a cylindrical receptacle (50) of the casing of the turbomolecular pump and fixed in a releasable manner.

9. Vacuum pump with a shaft, **characterised in that** a bearing module (1) according to any one of the preceding Claims and a permanent-magnet bearing (7) together support the shaft (2) in a rotatable manner.

## Revendications

1. Module de palier (1) pour pompe à vide avec arbre (2) à rotation rapide, ledit module (1) comprenant une bague extérieure (20) de palier à roulement, un réservoir de lubrifiant (21) doté d'une structure (22) et, du côté opposé à cette structure (22) par rapport au palier à roulement, un moyen de transport radial (25; 46) assurant le retour du lubrifiant vers le réservoir (21), **caractérisé en ce que** la structure (22), pour transférer le lubrifiant, se trouve en contact à frottement avec un dispositif de transport (23) agencé sur l'arbre, ce dispositif conduisant le lubrifiant vers le palier à roulement sous l'effet des forces centrifuges.

2. Module de palier selon la revendication 1, **caractérisé en ce que** le moyen de transport radial (25; 46) est agencé dans le module de palier (1).

3. Module de palier selon la revendication 1 ou 2, **caractérisé en ce qu'**il est agencé en outre, dans le circuit de recyclage du lubrifiant, entre le moyen de transport radial (25; 46) et le réservoir de lubrifiant (21), un moyen de transport axial (21 a; 47) permettant la circulation du lubrifiant.

4. Module de palier selon la revendication 2 ou 3, **caractérisé en ce que** le module de palier (1) est composé d'un premier élément (41) et d'un second élément (42) et **en ce que** moyen de transport radial est une fente (25) située entre le premier et le second élément.

5. Module de palier selon la revendication 4, **caractérisé en ce que** la bague extérieure (20) du palier présente un alésage (46) communiquant avec la fente (25), de sorte que le lubrifiant peut circuler de l'intérieur du palier à roulement vers l'extérieur.

6. Module de palier selon la revendication 4, **caractérisé en ce que** des deux éléments de module au moins l'un (41) ou l'autre (42) est conçu pour loger le réservoir de lubrifiant (21).

7. Module de palier selon l'une quelconque des revendications précédentes, **caractérisé en ce que** le premier (41) aussi bien que le second (42) élément est doté d'un revêtement sur au moins la partie de sa surface qui entre en contact avec le lubrifiant, afin d'empêcher une modification chimique de son matériau par réaction avec le lubrifiant.

8. Module de palier selon l'une quelconque des revendications précédentes, **caractérisé en ce que** ledit module (1) est inséré et fixé, amovible, dans un logement cylindrique (50) ménagé dans le corps de la pompe turbomoléculaire.

9. Pompe à vide avec arbre, **caractérisée en ce que** l'arbre (2) est monté, rotatif, à la fois sur un module de palier (1) selon l'une quelconque des revendications précédentes et sur un palier à aimant permanent (7).
